# EUROPEAN PATENT APPLICATION

(11) **EP 2 229 035 A1**
(43) Date of publication of application: **15.09.2010**
(21) Application number: 09710784.1
(22) Date of filing: 13.02.2009
(51) Int. Cl.: H04W 88/02

(54) **COMMUNICATION DEVICE AND METHOD FOR SENDING URGENT INFORMATION**

(30) Priority: 15.02.2008 CN 200810057762
(71) Applicant: Huawei Device Co., Ltd., Longgang District Shenzhen Guangdong 518129 (CN)
(72) Inventor: ZHANG, Jingli, Shenzhen Guangdong 518129 (CN)
(74) Representative: Reinhard - Skuhra - Weise & Partner GbR
(86) International application number: PCT/CN2009/070421
(87) International publication number: WO 2009/100685

(57) **Abstract**

A communication device and a method for sending urgent information are provided. The device includes: a keystroke sequence triggering module, adapted to trigger a sending process of the urgent information through a pre-set keystroke sequence that is inputted in the communication device; an information content acquiring module, adapted to automatically acquire an information content of the urgent information, in which the information content includes current position information of the communication device; a contact information acquiring module, adapted to automatically acquire contact information of a receiver of the urgent information; and an urgent information sending module, adapted to automatically send the information content acquired by the information content acquiring module according to the contact information acquired by the contact information acquiring module.

## Description

The application claims the benefit of priority to China Patent Application No. 200810057762.X, filed on February 15, 2008, and entitled "COMMUNICATION DEVICE AND METHOD FOR SENDING URGENT INFORMATION", which is incorporated herein by reference in its entirety.

### FIELD OF THE TECHNOLOGY

The present invention relates to the field of wireless communication, and more particularly to a communication device and a method for sending urgent information.

### BACKGROUND OF THE INVENTION

Nowadays, we are witnessing an information-explosive world and various electronic tools become increasingly sophisticated. For modern people, as the tempo of life gets faster, and the living pressure is increased, they often need to work late into the night or rush to work in early morning. Meanwhile, various crime rates are increasing. Therefore, people may encounter various dangerous situations and get injured sometimes.

In the case that people encounter an emergency, a protective mechanism is required to protect people urgently, which enables people to send out an ask-for-help information to notify the current urgent situation.

### SUMMARY OF THE INVENTION

Accordingly, the present invention is directed to a communication device and a method for sending urgent information, which provides a solution that a user sends out urgent ask-for-help information when the user is in an urgent situation.

The present invention is achieved through the following technical solutions.

A communication device for sending urgent information is provided, which includes a keystroke sequence triggering module, an information content acquiring module, a contact information acquiring module, and an urgent information sending module.

The keystroke sequence triggering module is adapted to trigger a sending process of the urgent information through a pre-set keystroke sequence that is inputted in the communication device.

The information content acquiring module is adapted to automatically acquire an information content of the urgent information, and deliver the information content to the urgent information sending module.

The contact information acquiring module is adapted to automatically acquire contact information of a receiver of the urgent information, and deliver the contact information to the urgent information sending module.

The urgent information sending module is adapted to automatically send the information content delivered by the information content acquiring module according to the contact information delivered by the contact information acquiring module.

A method for sending urgent information is provided, which includes the following steps.

A pre-set keystroke sequence is inputted in a communication device.

An information content of the urgent information is automatically acquired, and contact information of a receiver of the urgent information is automatically acquired.

The information content of the urgent information is automatically sent according to the contact information.

As seen from the technical solutions provided in the present invention, in the present invention, a pre-set keystroke sequence is inputted in the communication device to trigger an automatic sending process of the urgent information, so that a user can send out the information such as his/her current position when the user is in an emergency without making a call, thereby reducing the danger level of the user in the emergency.

### BRIEF DESCRIPTION OF THE DRAWINGS

FIG. 1 is a schematic structural diagram of an emergency processing device according to an embodiment of the present invention;
FIG. 2 is a schematic diagram of an implementing process for a user to set a keystroke sequence through an indicator bar in a mobile terminal according to the present invention;
FIG. 3 is a schematic diagram of an implementing process for a user to set contact information through an indicator bar in a mobile terminal according to the present invention;
FIG. 4 is a schematic diagram of an implementing process for a user to set information content through an indicator bar in a mobile terminal according to the present invention;
FIG. 5 is a schematic diagram of an implementing process for a user to set a sending frequency and a backend mode of subsequent information through an indicator bar in a mobile terminal according to the present invention; and
FIG. 6 is a flow chart of a method for sending urgent information according to an embodiment of the present invention.

### DETAILED DESCRIPTION OF THE EMBODIMENTS

The present invention provides a communication device and a method for sending urgent information. When a user encounters an emergency, after the user triggers a pre-set keystroke sequence, the device immediately sends urgent information to a pre-set number to notify the emergency that the user encounters. Subsequently, the device automatically tracks the user in a silent mode having no images (that is, in a manner of black screen) in backend and continues to send the urgent information.

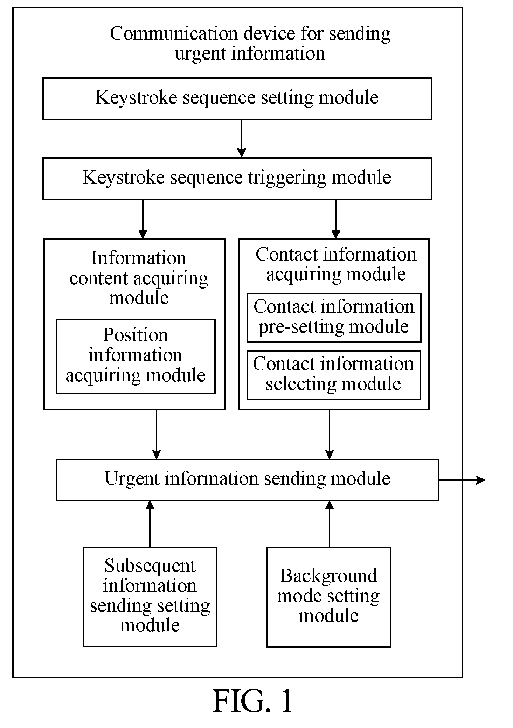

The communication device for sending urgent information in the present invention may be a communication device that is carried along by the user, for example, a mobile terminal. The present invention is described in detail below with reference to the accompanying drawings by taking a mobile terminal as an example. FIG. 1 is a schematic structural diagram of a communication device for sending urgent information according to an embodiment of the present invention. The communication device includes a keystroke sequence setting module, a keystroke sequence triggering module, a contact information acquiring module, an information content acquiring module, and an urgent information sending module.

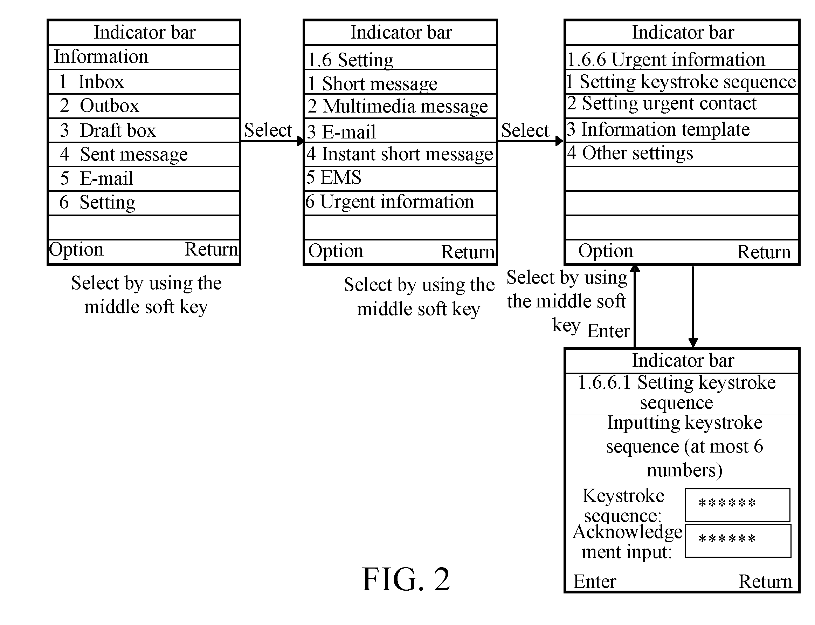

The keystroke sequence setting module is adapted to set a keystroke sequence for actuating to send urgent information in the mobile terminal. FIG. 2 is a schematic diagram of an implementing process for a user to set a keystroke sequence through an indicator bar in a mobile terminal. For example, the user sets a keystroke sequence of "#1*". In actual applications, according to the application functions provided by the supplier of the mobile terminal, the keystroke sequence may be set as including at most six keys, or the keystroke sequence may be set as pressing a key for exceeding a pre-set time period.

The keystroke sequence triggering module is adapted to trigger a sending process of the urgent information after the user inputs the keystroke sequence pre-set by the keystroke sequence setting module in the communication device.

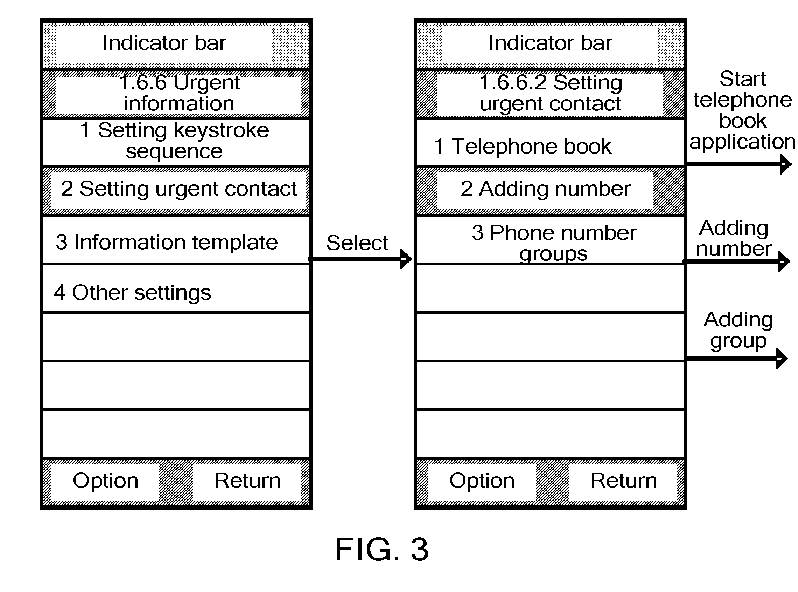

The contact information acquiring module is adapted to acquire contact information of a receiver of the urgent information sent by the mobile terminal. The receiver of the urgent information may be a relative of the user of the mobile terminal or a security department. The contact information may be a mobile terminal number of the receiver of the urgent information, and the contact information should not be some special numbers identified by the supplier of the mobile terminal. The contact information may be pre-set in the mobile terminal. FIG. 3 shows an implementing process for the user to set the contact information through an indicator bar in the mobile terminal. When no contact information is pre-set, the contact information acquiring module may select a receiver of the above urgent information from the receivers of previous messages in the mobile terminal randomly or according to a certain rule, and deliver the contact information to the urgent information sending module. The contact information acquiring module includes a contact information pre-setting module and a contact information selecting module.

The information content acquiring module is adapted to acquire an information content of the urgent information sent by the mobile terminal in an emergency, and deliver the information content of the urgent information to the urgent information sending module. The information content may be a pre-set message template, and a default message template should be set in the mobile terminal. When in an emergency, the information content acquiring module first acquires a content of the default message template. The message may be in a form of multimedia messaging service (MMS) message or short message system (SMS) message. The information content acquiring module includes a position information acquiring module.

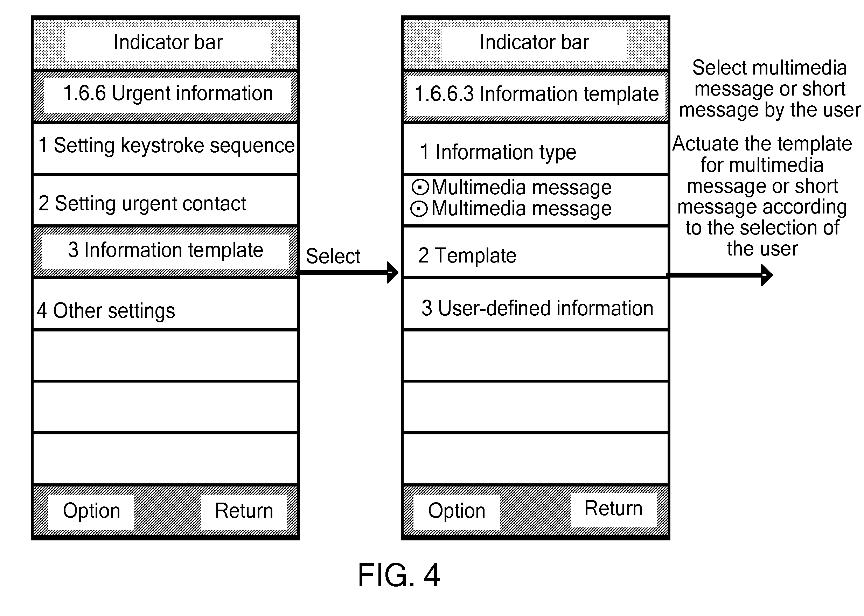

FIG. 4 is a schematic diagram of an implementing process for a user to set information content through an indicator bar in a mobile terminal. For example, the template of the message content may be "I am in danger, please help me, I am at..., please...immediately, do not call me, you will receive my latest position information every 5 seconds".

The urgent information sending module is adapted to send the urgent information acquired by the information content acquiring module to the receiver according to the contact information of the receiver acquired by the contact information acquiring module. The module may be an existing module for sending MMS messages or SMS messages in the mobile terminal.

In the embodiment of the communication device for sending urgent information in the present invention, a keystroke sequence for sending the urgent information is set through the keystroke sequence setting module; after the user inputs the keystroke sequence of the urgent information, a sending process of the urgent information is triggered by the keystroke sequence triggering module; the information content acquiring module acquires a content of the sent urgent information, and subsequently, the urgent information sending module sends the content of the urgent information according to the contact information of the receiver acquired by the contact information acquiring module. Thus, it is realized that when the user encounters an emergency, and triggers a pre-set keystroke sequence, the urgent information is immediately sent to a pre-set number to notify the emergency that the user encounters.

The mobile terminal further includes a subsequent information sending setting module and a backend mode setting module.

The subsequent information sending setting module is adapted to set a time interval for the mobile terminal to continue to send subsequent urgent information after sending first urgent information.

The backend mode setting module is adapted to set the communication device to continue to perform the sending process of the urgent information in backend in a silent mode having no images and to respond to no keystroke after the pre-set keystroke sequence is inputted in the communication device. Specifically, the communication device may be a mobile terminal, and in this case, even though someone wants to cut off the power of the user's mobile terminal, it does not work, and the mobile terminal is in a state of black screen. At this time, the module can ensure that the user terminal normally processes the urgent information in backend after the keystroke sequence has been triggered. In actual applications, the mobile terminal may be enabled to perform the backend mode by stopping powering on the display module, audio module, and keyboard module of the mobile terminal. In addition, it may be set that after the battery of the mobile terminal is removed, the application of the backend mode is cancelled, and at the same time, the process flow of the urgent information is stopped.

The device continues to send the urgent information through the subsequent information sending setting module, and also performs the sending operation of the urgent information in backend in a silent mode having no images through the backend mode setting module, thus automatically tracking the user and continuing to send the urgent information.

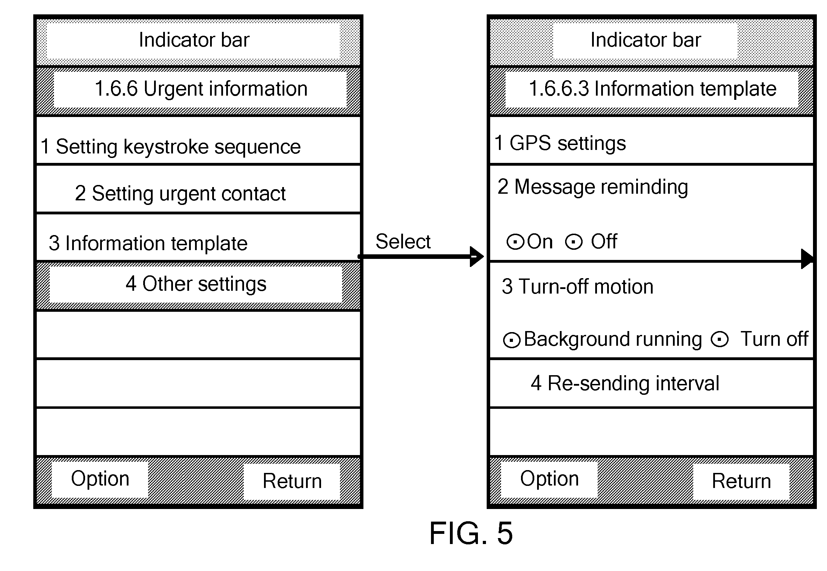

FIG. 5 is a schematic diagram of an implementing process for a user to set a sending frequency and a backend mode of subsequent information through an indicator bar in a mobile terminal.

The position information acquiring module in the contact information acquiring module is adapted to acquire current position information of the mobile terminal, and set the current position information into the information content of the urgent information. If the mobile terminal includes a global positioning system (GPS) system, the position information acquiring module acquires current GPS information of the mobile terminal through the GPS system; if the mobile terminal does not include the GPS system, the position information acquiring module acquires serving cell position information of the mobile terminal through cell registration information stored in the mobile terminal, and sets the serving cell position information into the information content of the urgent information.

If the mobile terminal carries a camera, the position information acquiring module captures image information of a scenario where the mobile terminal is located currently through the camera, and adds the image information into the urgent information.

The contact information pre-setting module in the contact information acquiring module is adapted to pre-set the contact information of the receiver of the urgent information in the mobile terminal, and the contact information acquiring module acquires the pre-set contact information after the keystroke sequence is triggered in the mobile terminal.

The contact information selecting module in the contact information acquiring module is adapted to select the contact information from contact information of the receivers of pervious messages in the user terminal randomly or according to a certain rule when no contact information is pre-set.

The keystroke sequence triggering module, the contact information acquiring module, the information content acquiring module, and the urgent information sending module should automatically perform the corresponding processing functions without being interfered by the user, and thereby realizing the automatic sending of the urgent information.

The specific implementations of the present invention further provide an embodiment, in which a communication device for sending urgent information is provided. The device specifically includes: a keystroke sequence triggering module, adapted to trigger a sending process of the urgent information through a pre-set keystroke sequence that is inputted in the communication device; an information content acquiring module, adapted to automatically acquire an information content of the urgent information and deliver the information content to an urgent information sending module; a contact information acquiring module, adapted to automatically acquire contact information of a receiver of the urgent information and deliver the contact information to the urgent information sending module; and the urgent information sending module, adapted to automatically acquire the information content and send the information content according to the contact information. When the user encounters an emergency and triggers a pre-set keystroke sequence, the device in this embodiment immediately sends urgent information to a pre-set number to notify the emergency that the user encounters.

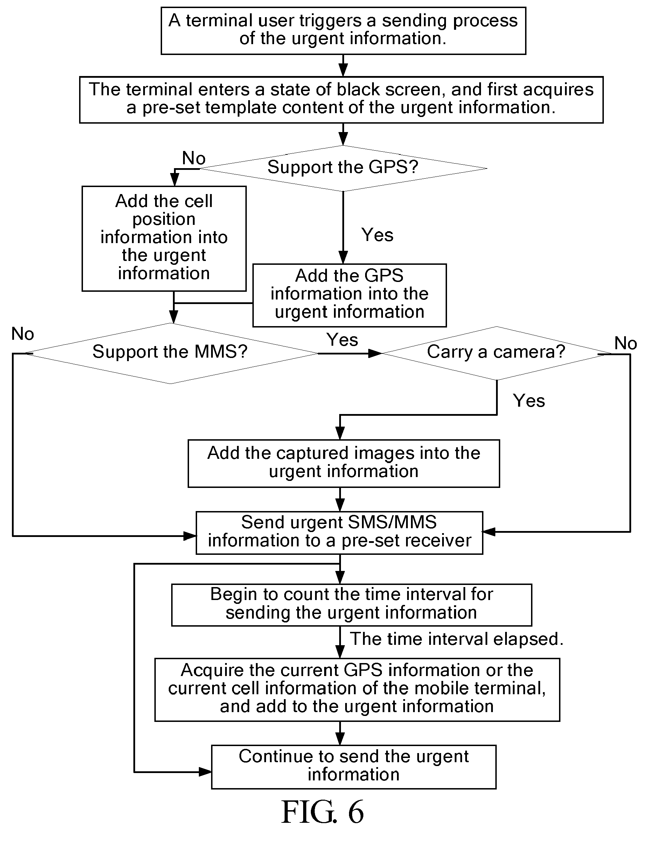

The specific implementations of the present invention further provide a method for sending urgent information. FIG. 6 is a flow chart of the method, and the method includes the following steps.

In Step 61, a user of a mobile terminal encounters an emergency, and the user inputs a pre-set keystroke sequence in the mobile terminal to trigger a sending process of the urgent information.

In Step 62, the communication device is set to continue to perform the sending process of the urgent information in backend in a silent mode having no images and to respond to no keystroke. At this time, even though someone wants to cut off the power of the user's mobile terminal, it does not work, and the mobile terminal is in a backend processing mode of a black screen state. The mobile terminal first enters an acquiring process of the content of the urgent information.

In Step 63, it is determined whether the mobile terminal supports the GPS, and if yes, Step 64 is performed; otherwise, Step 65 is performed.

In Step 64, the GPS information of the mobile terminal is acquired, and the GPS information is added into the content of the urgent information. Step 66 is performed.

In Step 65, the serving cell information of the mobile terminal is acquired, and the serving cell information is added into the content of the urgent information. Step 66 is performed.

In Step 66, it is determined whether the mobile terminal supports an MMS message, and if yes, Step 67 is performed; otherwise, Step 69 is performed.

In Step 67, it is determined whether the terminal carries a camera, and if yes, Step 68 is performed; otherwise, Step 69 is performed.

In Step 68, an image of a scenario where the mobile terminal is located currently is captured through the camera, and the image is added into the MMS message. Step 69 is performed.

In Step 69, the contact information of a receiver of the urgent information is acquired, and the constructed urgent MMS or SMS message is sent to the receiver. The urgent MMS or SMS message includes the current position information of the mobile terminal.

In Step 70, a timer is set for sending the urgent information repeatedly.

In Step 71, when the timer expires, the current GPS information or the current serving cell information of the mobile terminal is acquired, and the current GPS information or the current serving cell information is added into the urgent information.

In Step 72, the urgent information that carries the current GPS information or the current serving cell information of the mobile terminal is sent to the receiver. The timing of the timer is continued to be monitored, and the urgent information is sent to the receiver again when the timer expires once again.

In the method provided by the above embodiment, a keystroke sequence is pre-set; a sending process of the urgent information is triggered when the user inputs the set keystroke sequence; and a content of the urgent information is sent to an urgent receiver, thus achieving the purpose of sending the urgent information to a pre-set number immediately to notify the emergency that the user encounters when the user encounters the emergency and triggers the pre-set keystroke sequence. Furthermore, the method further achieves the purpose of automatically tracking the user and continuing to send the urgent information through setting a timer for sending the urgent information repeatedly, and repeatedly sending the urgent information when the timer expires. The urgent information may further include the current GPS information or current serving cell information, or may further include the image of the scenario where the user is currently located, so that the information of the scenario where the user is located is further provided.

The specific implementations of the present invention further provide another embodiment, in which a method for sending urgent information is provided, and the method includes the following steps: a pre-set keystroke sequence is inputted in a communication device; an information content of the urgent information is automatically acquired, and contact information of a receiver of the urgent information is automatically acquired; and the information content of the urgent information is automatically sent according to the contact information. When the user encounters an emergency and triggers a pre-set keystroke sequence, the method in this embodiment can immediately send urgent information to a pre-set number to notify the emergency that the user encounters.

To sum up, by applying the device and the method according to the present invention, when the user is in an emergency, the information such as his/her current position can be sent without making a call, and a receiver is enabled to track the subsequent position information of the user based on the GPS or serving cell. By setting and running automatically a backend mode, the danger level of the user in the emergency can be reduced, thereby protecting the user in a better way.

In conclusion, the above are merely preferred embodiments of the present invention. However, the scope of the present invention is not limited thereto. Changes or replacements readily apparent to persons skilled in the prior art within the technical scope of the present invention should fall within the scope of the present invention. Therefore, the protection scope of the present invention is subject to the appended claims.

## Claims

1. A communication device for sending urgent information, comprising:
a keystroke sequence triggering module, adapted to trigger a sending process of the urgent information through a pre-set keystroke sequence that is inputted in the communication device;
an information content acquiring module, adapted to automatically acquire an information content of the urgent information, and deliver the information content to an urgent information sending module;
a contact information acquiring module, adapted to automatically acquire contact information of a receiver of the urgent information, and deliver the contact information to the urgent information sending module; and
an urgent information sending module, adapted to automatically acquire the information content and send the information content according to the contact information.

2. The communication device for sending urgent information according to claim 1, wherein the communication device further comprises:
a backend mode setting module, adapted to set the communication device to continue to perform the sending process of the urgent information in backend in a silent mode having no images and to respond to no keystroke after the sending process of the urgent information is triggered by the keystroke sequence triggering module.

3. The communication device for sending urgent information according to claim 1, wherein the communication device further comprises:
a keystroke sequence setting module, adapted to set a keystroke sequence in the communication device.

4. The communication device for sending urgent information according to claim 1, wherein the communication device further comprises:
a subsequent information sending setting module, adapted to set a time interval for subsequently sending the urgent information; and
the urgent information sending module, adapted to continue to send the urgent information according to the time interval.

5. The communication device for sending urgent information according to any one of claims 1 to 4, wherein the information content acquiring module comprises:
a position information acquiring module, adapted to acquire current position information of the communication device, and set the position information into the information content of the urgent information.

6. The communication device for sending urgent information according to any one of claims 1 to 4, wherein the information content acquiring module comprises pre-set message templates, and at least one default message template is designated.

7. The communication device for sending urgent information according to any one of claims 1 to 4, wherein the contact information acquiring module comprises at least one of a contact information pre-setting module and a contact information selecting module, wherein
the contact information pre-setting module is adapted to pre-set the contact information of the receiver of the urgent information in the communication device; and
the contact information selecting module is adapted to select the contact information of the receiver of the urgent information from the receivers of previous messages in the communication device randomly or according to a set rule.

8. A method for sending urgent information, comprising:
inputting a pre-set keystroke sequence in a communication device;
automatically acquiring an information content of the urgent information, and automatically acquiring contact information of a receiver of the urgent information; and
automatically sending the information content of the urgent information according to the contact information.

9. The method for sending urgent information according to claim 8, further comprising:
setting the communication device to continue to perform a sending process of the urgent information in backend in a silent mode having no images and to respond to no keystroke after the pre-set keystroke sequence is inputted in the communication device.

10. The method for sending urgent information according to claim 8, wherein before the inputting the pre-set keystroke sequence in the communication device, the method further comprises:
setting a keystroke sequence in the communication device, wherein the sending process of the urgent information is triggered after the keystroke sequence is inputted in the communication device by the user.

11. The method for sending urgent information according to claim 8, wherein the automatically acquiring the information content of the urgent information further comprises:
acquiring current global positioning system, GPS, position information or serving cell position information of the communication device, and adding the GPS position information or the serving cell position information into a pre-set message template to constitute the urgent information.

12. The method for sending urgent information according to claim 11, wherein the automatically acquiring the information content of the urgent information further comprises:
capturing, by the communication device, image information of a scenario where the communication device is located currently, and adding the image information into the urgent information.

13. The method for sending urgent information according to any one of claims 8 to 12, further comprising:
pre-setting the contact information of the receiver of the urgent information; or
selecting the contact information of the receiver of the urgent information from the receivers of previous messages in the communication device randomly or according to a set rule.
